# EUROPEAN PATENT APPLICATION

(11) **EP 4 395 014 A1**
(43) Date of publication of application: **03.07.2024**
(21) Application number: 23855871.2
(22) Date of filing: 07.08.2023
(51) Int. Cl.: H01M 10/6567, H01M 10/6568, H01M 10/625, H01M 10/613, H01M 50/271, H01M 50/24, H01M 50/249, H01M 50/211

(54) **IMMERSION COOLING BATTERY MODULE, AND BATTERY PACK AND VEHICLE INCLUDING SAME**

(30) Priority: 14.11.2022 KR 20220151508
(71) Applicant: LG ENERGY SOLUTION, LTD., Seoul 07335 (KR)
(72) Inventor: LEE, Jung-Hoon, Yuseong-gu, Daejeon 34122 (KR); KIM, Doo-Seung, Yuseong-gu, Daejeon 34122 (KR); UM, Tae-Ki, Yuseong-gu, Daejeon 34122 (KR); RYU, Jae-Uk, Yuseong-gu, Daejeon 34122 (KR)
(74) Representative: Plasseraud IP
(86) International application number: PCT/KR2023/011619
(87) International publication number: WO 2024/106693

(57) **Abstract**

An immersion-cooled battery module according to an embodiment of the present disclosure includes a battery assembly including a plurality of battery cells; a module case having an opening at least at one end and accommodating the battery assembly and a cooling liquid in an internal space connected to the opening; a sealing cover inserted into the opening to airtightly cover the opening; and an end cover coupled to the opening into which the sealing cover is inserted to cover the opening, wherein the sealing cover includes a wall portion facing the opening edge of the module case forming the opening at a predetermined distance, wherein at least a part of the edge portion of the end cover is configured to be inserted and coupled between the opening edge and the wall portion.

## Description

### TECHNICAL FIELD

The present application claims priority to Korean Patent Application No. 10-2022-0151508 filed on November 14, 2022, the disclosures of which are incorporated herein by reference.

The present disclosure relates to an immersion-cooled battery module, and a battery pack and a vehicle including the same, and more specifically, to an immersion-cooled battery module cooling battery cells that can be charged and discharged by direct contact with a cooling liquid, and a battery pack and a vehicle including the same.

### BACKGROUND ART

In general, a secondary battery refers to a battery that can be repeatedly charged and discharged, such as a lithium-ion battery, a lithium polymer battery, a nickel cadmium battery, a nickel hydrogen battery, a nickel zinc battery, and the like. A battery cell, which is the most basic secondary battery, may provide an output voltage of approximately 2.5 V to 4.2 V.

Recently, as this secondary battery has been applied to devices or systems that require high output voltage and large charging capacity, such as an electric vehicle or an energy storage system (ESS), a battery module in which multiple battery cells are densely placed in a limited space and connected in series, parallel, or a combination of series and parallel, or a battery pack in which these battery modules are densely placed again and connected in series, parallel, or a combination of series and parallel is widely used. In order for such a battery module or battery pack in which a large number of battery cells are densely placed in a limited space to operate normally, the temperature of the battery cells should be properly maintained.

However, as disclosed in Korean Patent Publication No. 10-2019-0053574, the existing technology cools the battery cells using a heat sink 300 that contacts only the lower edge portion of the battery cells. Therefore, such existing technology has problems of poor battery cell cooling performance and difficulty in preventing thermal runaway occurring in the battery cells. In addition, since such existing technology cannot control fires generated in the event of thermal runaway of a battery cell, there is a problem of difficulty in preventing a series of thermal runaway of other battery cells or other battery modules around the battery cell in which thermal runaway occurred.

In addition, as disclosed in Korean Patent Publication No. 10-2021-0048855, in the existing technology for cooling the battery cells embedded in a battery module using insulating oil, the opening of the frame 200 accommodating the battery cell stack 100 is sealed with an end plate 300 having a simple structure, so that there are a constant risk of leakage of insulating oil and a problem in that the durability and safety of the sealing structure are inferior. In addition, since this existing technology provides battery module cases 200, 300 for each battery cell stack, and supplies and discharges the insulating oil through independent pipes 500, 600, 700 for each case 200, 300, it requires a lot of space to install insulating oil pipes, and as a result, there are problems of not only increasing the manufacturing cost of the battery pack including the corresponding battery module, but also reducing energy density due to the increase in the overall volume and weight of the battery pack.

### DISCLOSURE

### Technical Problem

The present disclosure is designed to solve the problems of the related art, and therefore the present disclosure is directed to providing an immersion-cooled battery module that improves the cooling performance of the battery module to prevent thermal runaway or a series of thermal runaway of the battery cells included in the battery module, and a battery pack and a vehicle including the same.

The present disclosure is also directed to providing an immersion-cooled battery module capable of minimizing the risk of cooling oil leakage and improving energy density, and a battery pack and a vehicle including the same.

### Technical Solution

An immersion-cooled battery module according to one aspect of the present disclosure includes a battery assembly including a plurality of battery cells; a module case having an opening at least at one end and accommodating the battery assembly and a cooling liquid in an internal space connected to the opening; a sealing cover inserted into the opening to airtightly cover the opening; and an end cover coupled to the opening into which the sealing cover is inserted to cover the opening, wherein the sealing cover includes a wall portion facing the opening edge of the module case forming the opening at a predetermined distance, wherein at least a part of the edge portion of the end cover is configured to be inserted and coupled between the opening edge and the wall portion.

In an embodiment, the sealing cover may further include a fixing portion protruding from a first surface of the sealing cover toward the internal space, wherein the edge of the fixing portion may be configured to be attached and fixed to the inner surface of the module case.

In an embodiment, the immersion-cooled battery module may further include a sealing tape where one side is attached to the edge of the fixing portion and the other side is attached to the inner surface of the module case.

In an embodiment, the end cover may include a body covering the opening; an inner edge extending from the body toward the internal space of the module case and inserted between the inner surface of the opening edge and the wall portion; and an outer edge extending from the body toward the outer surface of the opening edge and attached to the outer surface of the opening edge.

In an embodiment, the inner edge and the outer edge may be spaced apart from each other at a predetermined distance, and the opening edge may be configured to be inserted between the inner edge and the outer edge.

In an embodiment, a sealant may be interposed between the inner edge and the inner surface of the opening edge, and a structural adhesive may be interposed between the outer edge and the outer surface of the opening edge.

In an embodiment, a sealant may be interposed between the inner edge and the wall portion.

In an embodiment, the battery assembly may include a plurality of sub-battery modules each having a battery cell stack in which a plurality of battery cells are stacked and disposed side by side in a first direction; and an insulating block made of an insulating material and disposed between the first sub-battery module and the second sub-battery module adjacent to each other among the plurality of sub-battery modules.

In an embodiment, the insulating block may include a communication groove that is provided in an edge portion of the insulating block in close contact with the inner surface of the module case and allows the cooling liquid to pass from the first sub-battery module side to the second sub-battery module side.

In an embodiment, both ends of the insulating block may be coupled to the first sub-battery module and the second sub-battery module, respectively.

In an embodiment, the module case may include a stopper that protrudes from the inner surface of the module case and supports the insulating block, thereby restricting movement of the insulating block.

In an embodiment, the cooling liquid may include an insulating oil or a dielectric liquid.

A battery pack according to another aspect of the present disclosure may include an immersion-cooled battery module according to any one of the above-described embodiments.

A vehicle according to still another aspect of the present disclosure may include an immersion-cooled battery module according to any one of the above-described embodiments.

### Advantageous Effects

According to the present disclosure, the battery cells accommodated inside the module case of the battery module may be cooled through direct contact with the cooling liquid introduced into the module case, thereby omitting the battery cell cooling means such as a thermal pad, a heat sink, and the like, improving the battery cell cooling performance, and effectively preventing thermal runaway of the battery cell. In addition, in the event of a fire caused by thermal runaway of a battery cell, the cooling liquid charged inside the module case may function as a fire extinguishing agent, thereby preventing a series of thermal runaway of other battery cells or other battery modules around the battery cell where thermal runaway occurred.

In addition, the inner edge of the first end cover covering one end opening of the module case is inserted and coupled between the wall portion of the first sealing cover inserted into the opening and the edge of the opening, and the edge of the opening is inserted and coupled between the inner edge and the outer edge of the first end cover, thereby forming a meander-shaped sealing structure, which may result in minimizing the risk of leakage of the cooling liquid introduced into the battery module.

In addition, the sealing tape, liquid sealant, and structural adhesive applied to the sealing structure may triply block leakage of the cooling liquid, thereby improving the durability and safety of the immersion-cooled battery module.

In addition, a plurality of sub-battery modules, each having a battery cell stack in which a plurality of battery cells are stacked, may be accommodated in one module case to form one battery module, thereby reducing the number of battery modules included in the battery pack. As a result, in a battery pack including multiple battery modules, the space occupied by the inlet and outlet provided for each battery module and the space occupied by the pipes required to supply a cooling liquid to and recover it from each battery module are reduced, so that it may not only reduce the manufacturing cost of the battery pack, but also lower the overall volume and weight of the battery pack and improve the energy density of the battery pack.

In addition, an insulating block disposed between a first sub-battery module and a second sub-battery module disposed adjacent to each other among the plurality of sub-battery modules may be coupled to the first and second sub-battery modules, respectively, to support the first and second sub-battery modules, thereby preventing damage to the sub-battery modules due to physical shock or vibration while ensuring electrical safety of the sub-battery modules.

In addition, a communication groove for passing the cooling liquid is provided in an edge portion of the insulating block that is in close contact with the inner surface of the module case, thereby facilitating the flow of the cooling liquid, which may result in further improving the cooling performance of the battery module.

In addition, one circuit board of the plurality of circuit boards corresponding to the plurality of sub-battery modules may transmit the electrical signal sensed by itself and the electrical signal sensed by the remaining circuit boards to the outside through one waterproof connector, thereby facilitating the electrical connection between the battery module and external electrical devices, simplifying the wiring structure of the battery pack including multiple battery modules, and monitoring the status of the battery module for each sub-battery module.

In addition, the waterproof connector is coupled to a sealing cover provided with an inlet or outlet and disposed in a space secured to connect the inlet or outlet to the pipe, so that there is no need to secure a separate space to enable the electrical connection work of the waterproof connector within the battery pack, and the electrical connection work of the waterproof connector may be facilitated.

Furthermore, those skilled in the art to which the present disclosure belongs will easily understand from the following description that various embodiments according to the present disclosure may solve several technical problems not mentioned above.

### DESCRIPTION OF DRAWINGS

FIG. 1 is a perspective view showing an immersion-cooled battery module according to an embodiment of the present disclosure.
FIG. 2 is an exploded perspective view showing the immersion-cooled battery module shown in FIG. 1.
FIG. 3 is an exploded perspective view showing a battery assembly accommodated in a module case of an immersion-cooled battery module according to an embodiment of the present disclosure.
FIG. 4 is an enlarged view showing an insulating block of the battery assembly shown in FIG. 3.
FIG. 5 is a vertical cross-sectional view showing portion A1 of FIG. 4.
FIG. 6 is a perspective view showing a first sealing cover of an immersion-cooled battery module according to an embodiment of the present disclosure.
FIG. 7 is a vertical cross-sectional view showing the first sealing cover coupled to the module case.
FIG. 8 is a perspective view showing a first end cover of an immersion-cooled battery module according to an embodiment of the present disclosure.
FIG. 9 is a vertical cross-sectional view taken along line S-S' of the first end cover shown in FIG. 8.
FIG. 10 is a vertical cross-sectional view showing the first end cover coupled to the module case.
FIG. 11 is an enlarged view showing portion A2 of FIG. 10.
FIG. 12 is a view showing a battery pack according to an embodiment of the present disclosure.
FIG. 13 is a view showing a vehicle according to an embodiment of the present disclosure.

### BEST MODE

Hereinafter, embodiments according to the present disclosure will be described in detail with reference to the accompanying drawings in order to clarify solutions corresponding to the technical problems of the present disclosure. However, if the description of related known technology rather obscures the gist of the present disclosure in describing the present disclosure, the description thereof may be omitted.

In addition, the terms used in this specification are terms defined in consideration of functions in the present disclosure, which may vary depending on the intention or custom of the designer, manufacturer, and the like. Therefore, definitions of terms to be described below should be made based on the content throughout this specification.

It should be noted that the components of the present disclosure shown in the accompanying drawings may be partially or entirely reduced, enlarged, omitted, or simplified to facilitate technical understanding.

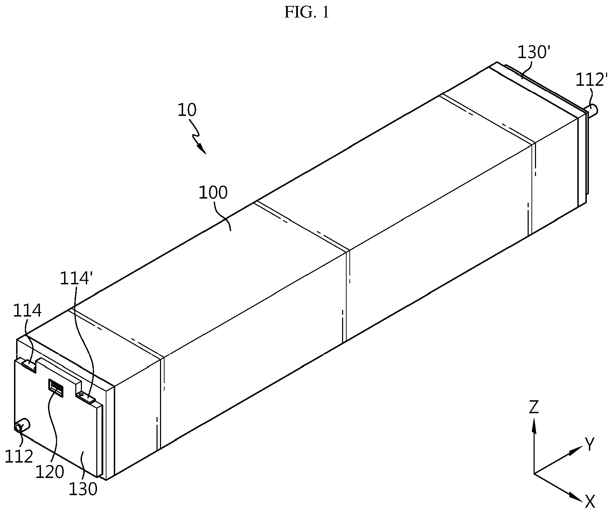

In FIG. 1, an immersion-cooled battery module 10 according to an embodiment of the present disclosure is shown in a perspective view.

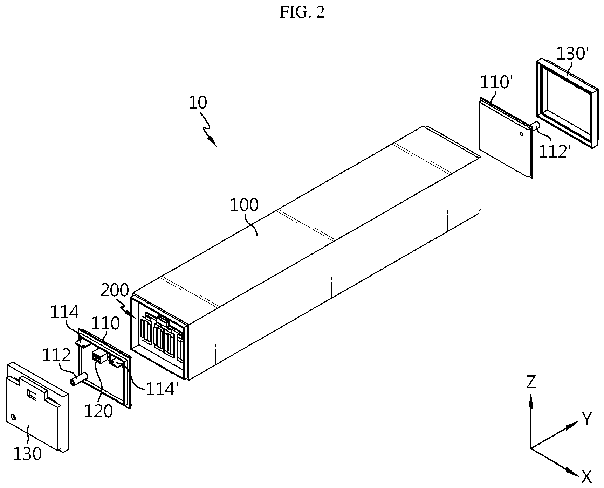

In FIG. 2, the immersion-cooled battery module 10 shown in FIG. 1 is shown in an exploded perspective view.

As shown in FIGS. 1 and 2, the battery module 10 according to an embodiment of the present disclosure is configured to cool the battery cells accommodated in the internal space of the module case 100 by directly contacting them with a cooling liquid. To this end, the battery module 10 may include a module case 100, a battery assembly 200, a sealing cover 110, 110', a waterproof connector 120, and an end cover 130, 130'.

The module case 100 may be configured to have an opening at least at one end and to accommodate the battery assembly 200 and the cooling liquid in an internal space connected to the opening. For example, the module case 100 may be configured in the form of a tube having an internal space extending in a first direction (Y-axis direction) and openings at both ends of the first direction.

This module case 100 may be made of a metal material having a certain strength. In addition, the module case 100 may be integrally formed through extrusion molding or sheet metal processes to prevent leakage of the cooling liquid.

The battery assembly 200 includes a plurality of battery cells and may be accommodated in the internal space of the module case 100. As will be described again below, this battery assembly 200 may include a plurality of sub-battery modules, each having a battery cell stack in which a plurality of battery cells are stacked, and a plurality of circuit boards corresponding to the plurality of sub-battery modules. In this case, the plurality of circuit boards may be configured to sense electrical signals related to the plurality of sub-battery modules.

The sealing covers 110, 110' may be configured to have at least one of an inlet 112 for introducing the cooling liquid into the internal space of the module case 100 and an outlet 112' for discharging the cooling liquid introduced into the internal space to the outside of the module case 100 and to be inserted into the opening of the module case 100 to airtightly cover the corresponding opening.

These sealing covers 110, 110' may include a first sealing cover 110 having an inlet 112 and covering one end opening of the module case 100, and a second sealing cover 110' having an outlet 112' and covering the other end opening of the module case 100. In this case, high voltage (HV) terminals 114, 114' providing an output of the battery module 10 and a waterproof connector 120 may be disposed on the first sealing cover 110.

The waterproof connector 120 is coupled to and supported by the first sealing cover 110, and may be configured to be electrically connected to the circuit boards of the battery assembly 200 to transmit electrical signals sensed by each circuit board to the outside of the module case 100.

The end covers 130, 130' may be configured to be coupled to openings of the module case 100 where the sealing covers 110, 110' are inserted and coupled to cover the openings. These end covers 130, 130' may include a first end cover 130 covering one end opening into which the first sealing cover 110 is inserted and a second end cover 130' covering the other end opening to which the second sealing cover 110' is coupled.

The cooling liquid applied to the present disclosure may include an insulation oil or a dielectric liquid having a high withstand voltage. For example, the cooling liquid may include one or at least two of trioctyl phosphate (TOP), tributyl phosphate (TOB), triphenyl phosphate, trimethyl phosphate, and tripropyl phosphate.

In a modified embodiment, the modified module case accommodating the battery assembly may be configured such that an opening is provided only at one end in the longitudinal direction thereof and the other end in the longitudinal direction thereof is closed. In addition, the modified sealing cover, which covers and seals the opening of the modified module case, may also be configured to have both an inlet and an outlet. According to this modified embodiment, configurations corresponding to the second sealing cover 110' and the second end cover 130' shown in FIGS. 1 and 2 may be omitted. In this case, the cooling liquid introduced through the inlet of the modified sealing cover may circulate around the internal space of the modified module case to cool the battery cells, and then be discharged through the outlet of the modified sealing cover.

As such, according to the present disclosure, the battery cells accommodated in the module case 100 of the battery module 10 may be cooled through direct contact with the cooling liquid introduced into the module case 100, thereby omitting the battery cell cooling means such as a thermal pad, a heat sink, or the like, improving the battery cell cooling performance, and effectively preventing thermal runaway of the battery cell. In addition, in the event of a fire caused by thermal runaway of a battery cell, the cooling liquid charged inside the module case may function as a fire extinguishing agent, thereby preventing a series of thermal runaway of other battery cells or other battery modules around the battery cell where thermal runaway occurred.

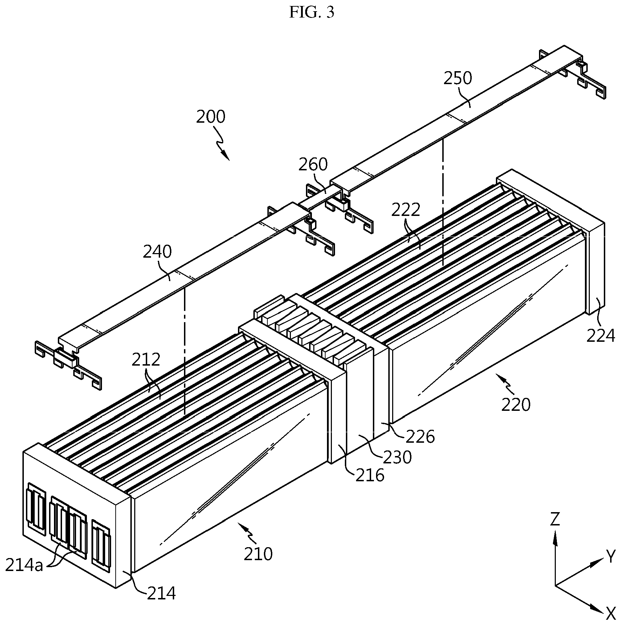

In FIG. 3, a battery assembly 200 accommodated in a module case of an immersion-cooled battery module according to an embodiment of the present disclosure is shown in an exploded perspective view.

As shown in FIG. 3, the battery assembly 200 may include a plurality of sub-battery modules 210, 220, an insulating block 230, and a plurality of circuit boards 240, 250.

The plurality of sub-battery modules 210, 220 may respectively have a battery cell stack in which a plurality of battery cells 212, 222 are stacked, and may be accommodated in the internal space of the module case 100 to be disposed side by side along the longitudinal direction (Y-axis direction) of the module case 100.

For example, the battery assembly 200 may include a first sub-battery module 210 and a second sub-battery module 220.

In this case, the first sub-battery module 210 may include a first battery cell stack in which a plurality of battery cells 212 are stacked in the width direction (X-axis direction) of the module case 100, a first busbar frame 214 disposed at one end in the longitudinal direction (Y-axis direction) of the first battery cell stack, and a second busbar frame 216 disposed at the other end in the longitudinal direction of the first battery cell stack.

In addition, the second sub-battery module 220 may include a second battery cell stack in which a plurality of battery cells 222 are stacked in the width direction (X-axis direction) of the module case 100, a third busbar frame 224 disposed at one end in the longitudinal direction (Y-axis direction) of the second battery cell stack, and a fourth busbar frame 226 disposed at the other end in the longitudinal direction of the second battery cell stack.

Each of the first to fourth busbar frames 214, 216, 224, 226 may be configured to support busbars 214a that electrically connects an electrode lead of a battery cell to an electrode lead of another battery cell or a separate terminal.

In addition, the battery cells forming the battery cell stack of each sub-battery module 210, 220 may include pouch-type battery cells accommodating an electrode assembly and an electrolyte material inside a pouch-type case.

The insulating block 230 may be made of an insulating material and may be disposed between the first sub-battery module 210 and the second sub-battery module 220 that are disposed adjacent to each other among the plurality of sub-battery modules. In addition, one end of the insulating block 230 may be coupled to the first sub-battery module 210, and the other end of the insulating block 230 may be coupled to the second sub-battery module 220.

In this way, the insulating block 230 may be coupled to the sub-battery modules 210, 220 adjacent to each other to support the corresponding sub-battery modules 210, 220, thereby preventing damage to the sub-battery modules 210, 220 due to physical shock or vibration while ensuring electrical safety of the sub-battery modules 210, 220.

The plurality of circuit boards 240, 250 may include a number of circuit boards respectively corresponding to the plurality of sub-battery modules 210, 220. For example, the plurality of circuit boards 240, 250 may include a first circuit board 240 corresponding to the first sub-battery module 210 and a second circuit board 250 corresponding to the second sub-battery module 220. The plurality of circuit boards 240, 250 may be accommodated in the internal space of the module case 100 and configured to sense electrical signals related to the plurality of sub-battery modules 210, 220.

To this end, each of the plurality of circuit boards 240, 250 may be disposed on top of a corresponding sub-battery module. In addition, the plurality of circuit boards 240, 250 may be composed of a flexible printed circuit board (FPCB), respectively.

In this case, the first circuit board 240 may be configured to sense a first electrical signal related to the first sub-battery module 210 of the plurality of sub-battery modules 210, 220. The first electrical signal may include an electrical signal indicating the output voltage, output current, or charging state of the battery cells included in the first sub-battery module 210.

The second circuit board 250 may be configured to sense a second electrical signal related to the second sub-battery module 220 of the plurality of sub-battery modules 210, 220. The second electrical signal may include an electrical signal indicating the output voltage, output current, or charging state of the battery cells included in the second sub-battery module 220.

In addition, the first circuit board 240 may be configured to receive the second electrical signal from the second circuit board 250, collect the first electrical signal sensed by itself and the second electrical signal transmitted from the second circuit board 250, and then transmit them to the outside through the waterproof connector 120.

To this end, the battery assembly 200 may further include a flat flexible cable (FFC) 260. The FFC 260 may be configured to electrically connect the first circuit board 240 and the second circuit board 250 and thus transmit the second electrical signal sensed by the second circuit board 250 to the first circuit board 240.

In general, the length of the battery module corresponds to the length of the battery cells constituting the battery module. However, since the immersion-cooled battery module 10 according to the present disclosure includes a plurality of sub-battery modules 210, 220 disposed side by side in the longitudinal direction (Y-axis direction), it is more than twice as long as a typical battery module including battery cells of the same size as those in the present disclosure. For example, if a typical battery module is manufactured in a length of about 500 mm to 610 mm, the immersion-cooled battery module 10 according to the present disclosure may be manufactured in a length of 1000 mm or more.

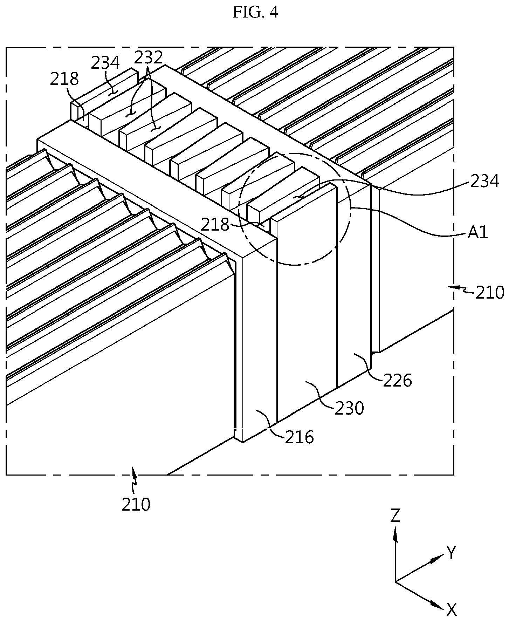

In FIG. 4, the insulating block 230 of the battery assembly shown in FIG. 3 is shown in an enlarged view.

As shown in FIG. 4, the insulating block 230 may be disposed between the first sub-battery module 210 and the second sub-battery module 220, which are disposed adjacent to each other. This insulating block 230 may be configured such that both ends thereof are coupled to the first sub-battery module and the second sub-battery module, respectively. That is, one end of the insulating block 230 may be coupled to the first sub-battery module 210, and the other end of the insulating block 230 may be coupled to the second sub-battery module 220.

In an embodiment, the insulating block 230 may be configured such that the edge thereof is in close contact with the inner surface of the module case 100. In this case, the insulating block 230 may have a communication groove 232.

The communication groove 232 may be configured to be provided in an edge portion of the insulating block 230 in close contact with the inner surface of the module case 100 and allow the cooling liquid introduced into the module case 100 to pass from the first sub-battery module 210 side to the second sub-battery module 220 side. To this end, the communication groove 232 may have a shape extending from the first sub-battery module 210 side to the second sub-battery module 220 side.

In addition, the communication groove 232 is configured to become narrower from the first sub-battery module 210 side to the second sub-battery module 220 side, so that the flow rate of the cooling liquid passing through the communication groove 232 may be increased. As a result, while the cooling liquid introduced into the module case 100 moves from the first sub-battery module 210 side to the second sub-battery module 220 side, the cooling performance may be prevented from deteriorating due to a decrease in the flow rate of the cooling liquid.

In an embodiment, the battery assembly 200 may further include a connection member 218 that electrically connects the first sub-battery module 210 and the second sub-battery module 220. This connection member 218 may be made of a conductive material such as metal.

In this case, the insulating block 230 may have a support groove 234 where at least a portion of the connection member 218 is inserted and supported.

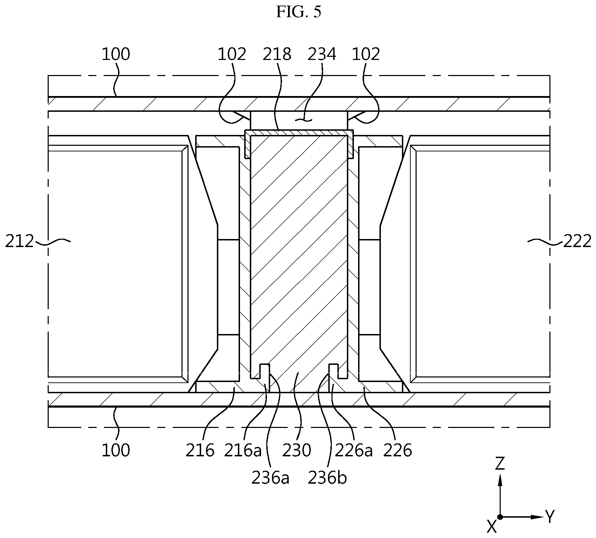

In FIG. 5, portion A1 of FIG. 4 is shown in a vertical cross-sectional view.

As shown in FIG. 5, one end of the insulating block 230 may be coupled to the second busbar frame 216 of the first sub-battery module, and the other end of the insulating block 230 may be coupled to the fourth busbar frame 226 of the second sub-battery module.

The second busbar frame 216 may be configured to support a busbar or terminal electrically connected to the battery cell 212 of the first sub-battery module. The fourth busbar frame 226 may be configured to support a busbar or terminal electrically connected to the battery cell 222 of the second sub-battery module.

The connection member 218 may be configured such that one end thereof is connected to a busbar or terminal disposed on the second busbar frame 216 and the other end thereof extends along the support groove 234 of the insulating block 230 to be connected to a busbar or terminal disposed on the fourth busbar frame 226.

In an embodiment, the second busbar frame 216 may include a first coupling protrusion 216a, and the insulating block 230 may include a first coupling groove 236a where the first coupling protrusion 216a is inserted and coupled. In this case, the first coupling protrusion 216a may extend in a first direction (e.g., Y-axis direction) toward the insulating block 230 and then be bent in a second direction (e.g., Z-axis direction) crossing the first direction. The first coupling groove 236a may be configured to match the first coupling protrusion 216a.

In addition, the fourth busbar frame 226 may include a second coupling protrusion 226a, and the insulating block 230 may include a second coupling groove 236b where the second coupling protrusion 226a is inserted and coupled. In this case, the second coupling protrusion 226a may extend in a third direction toward the insulating block 230 and then be bent in a fourth direction (e.g., Z-axis direction) crossing the third direction. The second coupling groove 236b may be configured to match the second coupling protrusion 226a.

In addition, in an embodiment, the module case 100 may include a stopper 102 that protrudes from the inner surface forming the internal space and supports the insulating block 230, thereby restricting movement of the insulating block 230. In this case, the stopper 102 may be in close contact with both ends of the insulating block 230 to restrict movement of the insulating block 230 so that the insulating block 230 is not tilted toward the first sub-battery module 210 or the second sub-battery module 220 while deviating from its regular position.

In this way, the insulating block 230 may be coupled to the sub-battery modules to support the sub-battery modules, and the stopper 102 may restrict movement of the insulating block 230, thereby preventing damage to the sub-battery modules due to physical shock or vibration while ensuring electrical safety of the sub-battery modules.

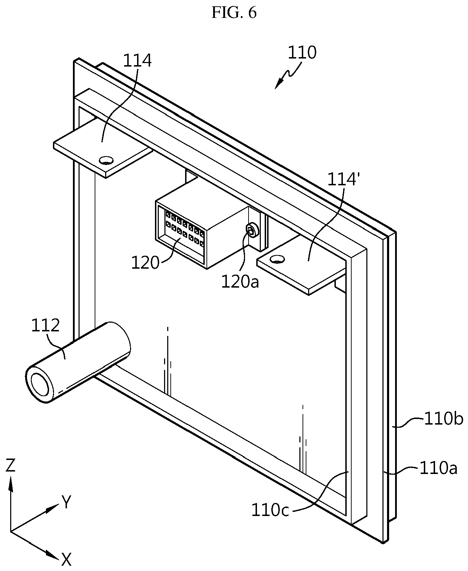

In FIG. 6, a first sealing cover 110 of an immersion-cooled battery module according to an embodiment of the present disclosure is shown in a perspective view.

As shown in FIG. 6, the first sealing cover 110 has an inlet 112 for introducing a cooling liquid into the internal space of the module case 100, and may be configured to be inserted into the opening of the module case 100 to airtightly cover the opening. To this end, the first sealing cover 110 may include a cover portion 110a, a fixing portion 110b, and a wall portion 110c.

The cover portion 110a may have the edge thereof in a form matching the opening of the module case 100 and may be configured to be inserted into the opening.

The fixing portion 110b may protrude from a first surface of the first sealing cover 110 (e.g., a first surface of the cover portion 110a) adjacent to the internal space of the module case 100 toward the internal space, and may be configured such that the edge thereof is attached and fixed to the inner surface of the module case 100. To this end, a sealing tape capable of double-sided adhesion may be attached to the edge surface of the fixing portion 110b facing the inner surface of the module case 100.

The wall portion 110c may protrude from a second surface of the first sealing cover 110 (e.g., a second surface of the cover portion 110a), which corresponds to the opposite surface of the first surface and faces the first end cover 130, and may be configured to face the opening edge of the module case 100 forming the opening at a predetermined distance. In this case, the wall portion 110c may be configured in the form of a loop that goes around the edge of the cover portion 110a.

As will be described again below, the wall portion 110c of the first sealing cover 110, together with the edge part of the cover portion 110a and the opening edge of the module case 100, may form a first insertion groove. The inner edge of the end cover 130 to be described later may be inserted into and coupled to this first insertion groove.

Meanwhile, on the second surface of the first sealing cover 110, high voltage (HV) terminals 114, 114' providing an output of the battery module 10 and a waterproof connector 120 may be disposed. In this case, the waterproof connector 120 may be fixed to the first sealing cover 110 by a fastening member 120a such as a bolt.

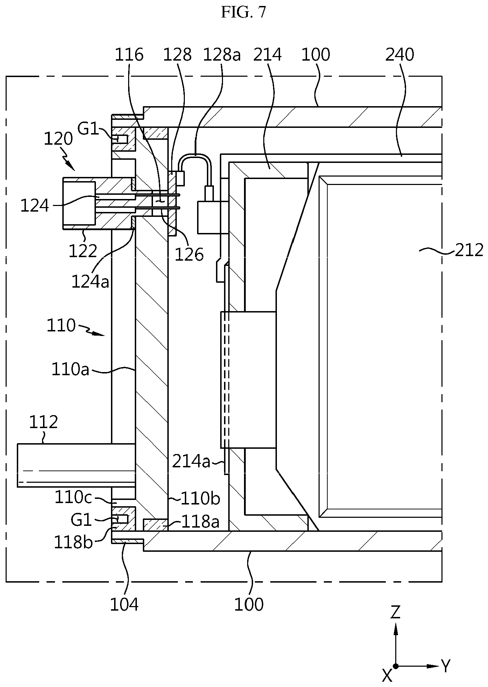

In FIG. 7, the first sealing cover 110 coupled to the module case 100 is shown in a vertical cross-sectional view.

As shown in FIG. 7, the first sealing cover 110 has an inlet 112 for introducing a cooling liquid into the internal space of the module case 100, and may be inserted into one end opening of the module case 100 to airtightly cover the opening.

To this end, the cover portion 110a of the first sealing cover 110 may be configured to have the edge thereof in a form matching the opening of the module case 100.

The fixing portion 110b of the first sealing cover 110 protrudes from the first surface of the cover portion 110a toward the internal space of the module case 100, and the edge thereof is attached and fixed to the inner surface of the module case 100.

To this end, a sealing tape 118a capable of double-sided adhesion may be attached to the edge surface of the fixing portion 110b facing the inner surface of the module case 100. In this case, the sealing tape 118a may have a multilayer structure in which an adhesive layer is respectively provided on both sides of a base layer made of a waterproof material.

For example, the base layer of the sealing tape 118a may include one or at least two material layers composed of one or at least two of polyimide, polypropylene, polyethylene, and polyethylene terephthalate. In addition, the adhesive layer of the sealing tape 118a may be composed of one or at least two of poly methyl methacrylate (PMMA), poly ethyl methacrylate (PEMA), and poly butyl methacrylate (PBMA).

In addition, the sealing tape 118a may further include a release paper covering the adhesive layer. This release paper may be removed by the operator just before the sealing tape 118a is attached.

The wall portion 110c of the first sealing cover 110 may protrude from a second surface of the first sealing cover 110, which is the opposite surface of the first surface adjacent to the internal space of the module case 100, in a direction away from the internal space of the 100, and may be configured to face the opening edge of the module case 100 forming the opening at a predetermined distance. As previously mentioned, the wall portion 110c may be configured in the form of a loop that goes around the edge of the cover portion 110a.

The wall portion 110c of the first sealing cover 110, together with the edge part of the cover portion 110a and the inner surface of the module case 100 forming the perimeter of the opening, may form a first insertion groove G1. A liquid sealant 118b, such as a sealing glue, may be applied to the inner surface of the first insertion groove G1.

In addition, a structural adhesive 104 with high shear strength may be applied to the outer surface of the opening edge of the module case 100. This structural adhesive 104 may include a polymer alloy adhesive or a polyimide adhesive. As will be described again below, the outer edge of the first end cover 130 to be described later may be attached and fixed to the outer surface of the opening edge to which the structural adhesive 104 is applied.

Meanwhile, the first sealing cover 110 may have a through hole 116 into which at least a portion of the waterproof connector 120 is inserted.

In addition, the waterproof connector 120 may include a connector body 122, a contact pin 124, and a connection pin 126.

The connector body 122 may be configured to be coupled to the second surface of the first surface of the first sealing cover 110 adjacent to the internal space of the module case 100 and the second surface of the first sealing cover 110 that is opposite to the first surface to cover the opening of the through hole 116 formed in the second surface. The connector body 122 of this waterproof connector 120 may be made of an insulating polymer synthetic resin, and may be fixed to the first sealing cover 110 by a fastening member such as a bolt.

In an embodiment, the waterproof connector 120 may further include a sealing member 122a interposed between the connector body 122 and the second surface of the first sealing cover 110 to seal the perimeter of the opening of the through hole 116. In this case, the sealing member 122a may include a sealant, a gasket, or both.

The contact pin 124 is supported by the connector body 122 and may be configured to extend in a direction away from the internal space of the module case 100. This contact pin 124 may be electrically connected by contacting a corresponding contact pin of a corresponding connector (not shown) connected to the waterproof connector 120. To this end, the contact pin 124 may be made of a metal material having conductivity. The waterproof connector 120 may include one or at least two such contact pins 124.

The connection pin 126 may be configured to be electrically connected to the contact pin 124 and extend from the connector body 122 toward the internal space of the module case 100 through the through hole 116, thereby being electrically connected to the first circuit board 240 among the plurality of circuit boards 240, 250 accommodated in the module case 100. To this end, the connection pin 126 may be made of a metal material having conductivity. The waterproof connector 120 may include one or at least two such connection pins 126.

In an embodiment, the contact pin 124 and the connection pin 126 may be integrally formed. In addition, in an embodiment, the connector body 122 may be integrally formed with the contact pin 124 and the connection pin 126 through an insert molding process.

Meanwhile, the battery module 10 may further include a connection circuit board 128 and a cable 128a for electrical connection between the waterproof connector 120 and the first circuit board 240.

In this case, the connection circuit board 128 may be configured to be coupled to the first surface of the first sealing cover 110 adjacent to the internal space of the module case 100 to cover the other end opening of the through hole 116 formed in the first surface and be electrically connected to the connection pin 126. To this end, the connection circuit board 128 may have a via hole into which the connection pin 126 is inserted. The connection pin 126 inserted into the via hole of the connection circuit board 128 may be fixed to the connection circuit board 128 through a soldering process again.

The cable 128a may be configured such that one end is electrically connected to the connection circuit board 128 and the other end is electrically connected to the first circuit board 240. This cable 128a may include a flat flexible cable (FFC). In this way, the first circuit board 240 connected to the cable 128a may be electrically connected to the busbar 214a connected to the electrode lead of the battery cell 212. In this case, the busbar 214a may be coupled and fixed to the first busbar frame 214.

For reference, as described with reference to FIGS. 1 and 2, the second sealing cover 110' covering the other end opening of the module case 100 has an outlet 112' for discharging the cooling liquid introduced into the internal space of the module case 100 and may be inserted into the other end opening to airtightly cover the other end opening. To this end, the second sealing cover 110' may include configurations corresponding to the cover portion 110a, the fixing portion 110b, and the wall portion 110c of the first sealing cover 110, respectively. However, configurations corresponding to the HV terminals 114, 114' or the waterproof connector 120 are not disposed in the second sealing cover 110'.

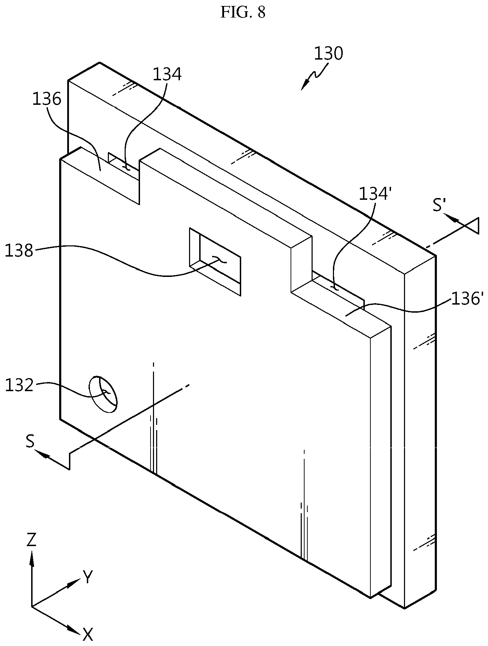

In FIG. 8, a first end cover 130 of an immersion-cooled battery module according to an embodiment of the present disclosure is shown in a perspective view.

As shown in FIG. 8, the first end cover 130 may be configured to be coupled to an opening of the module case 100 into which the first sealing cover 110 is inserted to cover the corresponding opening. This first end cover 130 may include an inlet hole 132 through which the inlet 112 of the first sealing cover 110 passes and a connector hole 138 into which at least a portion of the waterproof connector 120 is inserted and exposed to the outside.

In addition, the first end cover 130 may further include terminal holes 134, 134' through which the HV terminals 114, 114' disposed in the first sealing cover 110 pass, and support portions 136, 136' for supporting ends of the HV terminals 114, 114' extending outward through these terminal holes 134, 134'.

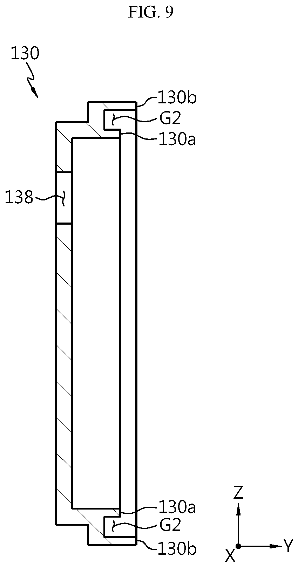

In FIG. 9, a vertical cross-sectional view taken along line S-S' of the first end cover 130 shown in FIG. 8 is shown.

As shown in FIG. 9, the first end cover 130 may have a cap structure that covers the opening of the module case 100 into which the first sealing cover 110 is inserted. In addition, at least a part of the edge portion of the first end cover 130 may be configured to be inserted and coupled between the opening edge of the module case 100 and the wall portion 110c of the first sealing cover 110. In this case, the first end cover 130 may include a body covering the opening, and an inner edge 130a and an outer edge 130b extending from the body.

The inner edge 130a may extend from the body of the first end cover 130 toward the internal space of the module case 100 and be inserted between the opening edge of the module case 100 and the wall portion 110c of the first sealing cover 110. That is, the inner edge 130a may be configured to be inserted into the first insertion groove G1 formed by the opening edge of the module case 100, the edge portion of the first sealing cover 110, and the wall portion 110c.

The outer edge 130b may extend toward the outer surface of the module case 100 and be attached to the outer surface portion to which the structural adhesive 104 is applied.

In addition, the inner edge 130a and the outer edge 130b may be spaced apart from each other at a predetermined distance to form a second insertion groove G2 into which the opening edge of the module case 100 is inserted.

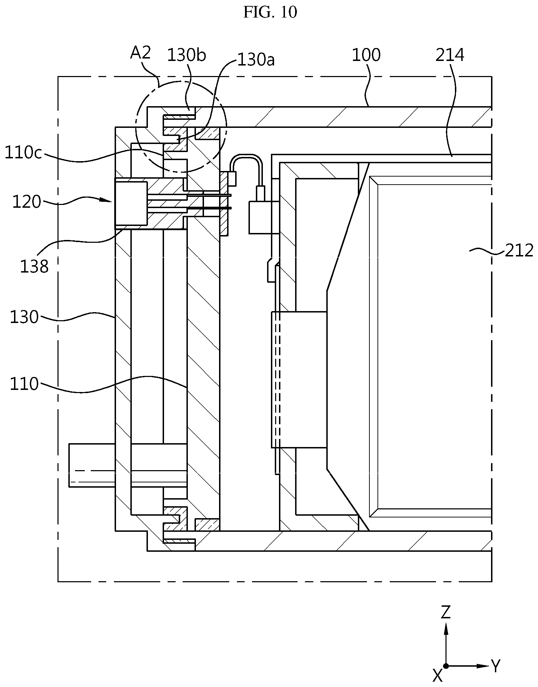

In FIG. 10, the first end cover 130 coupled to the module case 100 is shown in a vertical cross-sectional view.

As shown in FIG. 10, the inner edge 130a of the first end cover 130 may extend from the body of the first end cover 130 toward the internal space of the module case 100 and be inserted between the opening edge of the module case 100 and the wall portion 110c of the first sealing cover 110. That is, the inner edge 130a may be configured to be inserted into the first insertion groove G1 formed by the opening edge of the module case 100, the edge portion of the first sealing cover 110, and the wall portion 110c.

In addition, the outer edge 130b of the first end cover 130 may extend toward the outer surface of the module case 100 and be attached to the outer surface portion to which the structural adhesive is applied.

In addition, the opening edge of the module case 100 may be inserted and coupled between the inner edge 130a and the outer edge 130b of the first end cover 130. That is, the opening edge of the module case 100 may be inserted and coupled to the second insertion groove G2 formed between the inner edge 130a and the outer edge 130b.

Meanwhile, the end portion of the waterproof connector 120 may be inserted into and supported by the connector hole 138 of the first end cover 130.

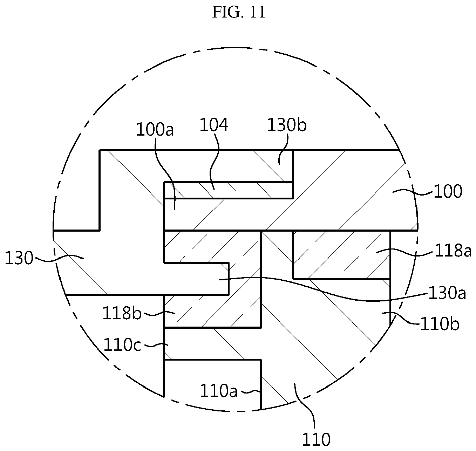

In FIG. 11, portion A2 of FIG. 10 is shown in an enlarged view.

As shown in FIG. 11, the inner edge 130a of the first end cover 130 may extend toward the internal space of the module case 100 and may be inserted into and coupled to the first insertion hole G1 formed between the opening edge 100a of the module case 100 and the wall portion 110c of the first sealing cover 110. In this case, the first insertion hole G1 may be filled with a liquid sealant 118b. As a result, the liquid sealant 118b may be interposed between the inner edge 130a of the first end cover 130 and the wall portion 110c of the first sealing cover 110. In addition, the liquid sealant 118b may also be interposed between the inner edge 130a of the first end cover 130 and the opening edge 100a of the module case 100.

The outer edge 130b of the first end cover 130 may extend toward the outer surface of the opening edge 100a and be attached to the outer surface of the opening edge 100a to which the structural adhesive 104 is applied.

Meanwhile, the opening edge 100a of the module case 100 may be inserted into and coupled to the second insertion groove formed between the inner edge 130a and the outer edge 130b of the first end cover 130. As a result, a liquid sealant 118b may be interposed between the inner edge 130a and the inner surface of the opening edge 100a, while a structural adhesive 104 may be interposed between the outer edge 130b and the outer surface of the opening edge 100a.

In this way, the inner edge 130a of the first end cover 130 is inserted and coupled between the wall portion 110c of the first sealing cover 110 and the opening edge 100a of the module case 100, and the opening edge 100a of the module case 100 is inserted and coupled between the inner edge 130a and the outer edge 130b of the first end cover 130, thereby forming a meander-shaped sealing structure, which may result in minimizing the risk of leakage of the cooling liquid introduced into the battery module 10.

In addition, the sealing tape 118a, liquid sealant 118b, and structural adhesive 104 applied to the sealing structure of the battery module 10 may triply block leakage of the cooling liquid, thereby improving the durability and safety of the immersion-cooled battery module 10.

For reference, as described with reference to FIGS. 1 and 2, the second end cover 130', which covers the other end opening of the module case 100 together with the second sealing cover 110', has an outlet hole through which the outlet 112' of the second sealing cover 110' passes, and may cover the other end opening into which the second sealing cover 110' is inserted. To this end, the second end cover 130' may include configurations corresponding to the inner edge 130a and the outer edge 130b of the first end cover 130. On the other hand, the second end cover 130' does not include configurations corresponding to terminal holes 134, 134' or connector holes 138 of the first end cover 130.

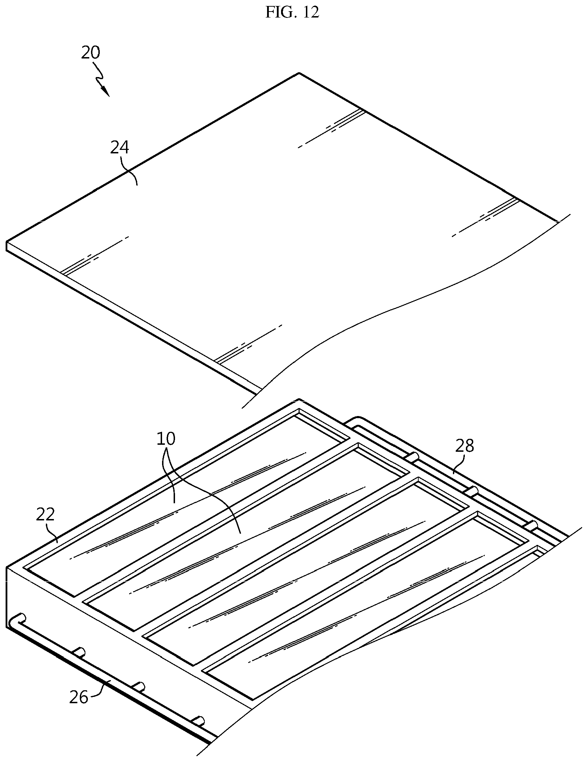

FIG. 12 shows a battery pack 20 according to an embodiment of the present disclosure.

As shown in FIG. 12, a battery pack 20 according to an embodiment of the present disclosure may include a battery module 10 according to the present disclosure, and a pack case 22, 24 accommodating one or at least two of these battery modules 10. The pack case 22, 24 may have a plurality of seating spaces for accommodating and seating a plurality of battery modules.

In addition, the battery pack 20 may further include a supply pipe 26 for supplying a cooling liquid to the battery module 10 and a return pipe 28 for recovering the cooling liquid discharged from the battery module 10. Although not shown in FIG. 12, the battery pack 20 may further include a cooling liquid tank for storing a cooling liquid, a pump for circulating the cooling liquid stored in the cooling liquid tank through the supply pipe 26 and the return pipe 28, and a chiller for removing heat from the cooling liquid recovered through the return pipe 28.

In addition, the battery pack 20 may further include various electrical components (not shown) that controls the charging and discharging operation of the battery module 10 accommodated in the pack case 22, 24, or monitors the state of charge (SOC), the state of health (SOH), and the like. These electrical components may be accommodated in the pack case 22, 24 together with the battery module 10.

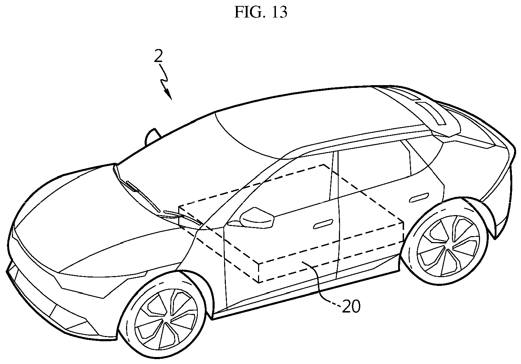

FIG. 13 shows a vehicle 2 according to an embodiment of the present disclosure.

As shown in FIG. 13, the vehicle 2 according to an embodiment of the present disclosure may include one or at least two battery modules 10 according to any one of the various embodiments described above, or may include at least one battery pack 20 including such battery modules 10.

As such, the battery module 10 or battery pack 20 applied to the vehicle 2 may provide electrical energy required for various operations of the vehicle 2.

For reference, it is a matter of course that the battery module according to the present disclosure may be applied to an energy storage system (ESS) or various electrical devices in addition to a vehicle.

As described above, according to the present disclosure, the battery cells accommodated inside the module case of the battery module may be cooled through direct contact with the cooling liquid introduced into the module case, thereby omitting the battery cell cooling means such as a thermal pad, a heat sink, and the like, improving the battery cell cooling performance, and effectively preventing thermal runaway of the battery cell. In addition, in the event of a fire caused by thermal runaway of a battery cell, the cooling liquid charged inside the module case may function as a fire extinguishing agent, thereby preventing a series of thermal runaway of other battery cells or other battery modules around the battery cell where thermal runaway occurred.

In addition, the inner edge of the first end cover covering one end opening of the module case is inserted and coupled between the wall portion of the first sealing cover inserted into the opening and the edge of the opening, and the edge of the opening is inserted and coupled between the inner edge and the outer edge of the first end cover, thereby forming a meander-shaped sealing structure, which may result in minimizing the risk of leakage of the cooling liquid introduced into the battery module.

In addition, the sealing tape, liquid sealant, and structural adhesive applied to the sealing structure may triply block leakage of the cooling liquid, thereby improving the durability and safety of the immersion-cooled battery module.

In addition, a plurality of sub-battery modules, each having a battery cell stack in which a plurality of battery cells are stacked, may be accommodated in one module case to form one battery module, thereby reducing the number of battery modules included in the battery pack. As a result, in a battery pack including multiple battery modules, the space occupied by the inlet and outlet provided for each battery module and the space occupied by the pipes required to supply a cooling liquid to and recover it from each battery module are reduced, so that it may not only reduce the manufacturing cost of the battery pack, but also lower the overall volume and weight of the battery pack and improve the energy density of the battery pack.

In addition, an insulating block disposed between a first sub-battery module and a second sub-battery module disposed adjacent to each other among the plurality of sub-battery modules may be coupled to the first and second sub-battery modules, respectively, to support the first and second sub-battery modules, thereby preventing damage to the sub-battery modules due to physical shock or vibration while ensuring electrical safety of the sub-battery modules.

In addition, a communication groove for passing the cooling liquid is provided in an edge portion of the insulating block that is in close contact with the inner surface of the module case, thereby facilitating the flow of the cooling liquid, which may result in further improving the cooling performance of the battery module.

In addition, one circuit board of the plurality of circuit boards corresponding to the plurality of sub-battery modules may transmit the electrical signal sensed by itself and the electrical signal sensed by the remaining circuit boards to the outside through one waterproof connector, thereby facilitating the electrical connection between the battery module and external electrical devices, simplifying the wiring structure of the battery pack including multiple battery modules, and monitoring the status of the battery module for each sub-battery module.

In addition, the waterproof connector is coupled to a sealing cover provided with an inlet or outlet and disposed in a space secured to connect the inlet or outlet to the pipe, so that there is no need to secure a separate space to enable the electrical connection work of the waterproof connector within the battery pack, and the electrical connection work of the waterproof connector may be facilitated.

Furthermore, it is a matter of course that embodiments according to the present disclosure may solve various other technical problems in addition to those mentioned in this specification in related technical fields as well as in the relevant technical field.

The present disclosure has been described hereinabove with reference to specific embodiments. However, it will be clearly understood to those skilled in the art that various modified embodiments may be implemented within the technical scope of the present disclosure. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

## Claims

1. An immersion-cooled battery module comprising:
a battery assembly comprising a plurality of battery cells;
a module case having an opening at least at one end and accommodating the battery assembly and a cooling liquid in an internal space connected to the opening;
a sealing cover inserted into the opening to airtightly cover the opening; and
an end cover coupled to the opening into which the sealing cover is inserted to cover the opening,
wherein the sealing cover comprises a wall portion facing the opening edge of the module case forming the opening at a predetermined distance,
wherein at least a part of the edge portion of the end cover is configured to be inserted and coupled between the opening edge and the wall portion.

2. The immersion-cooled battery module according to claim 1,
wherein the sealing cover further comprises a fixing portion protruding from a first surface of the sealing cover toward the internal space,
wherein the edge of the fixing portion is configured to be attached and fixed to the inner surface of the module case.

3. The immersion-cooled battery module according to claim 2,
which further comprises a sealing tape where one side is attached to the edge of the fixing portion and the other side is attached to the inner surface of the module case.

4. The immersion-cooled battery module according to claim 1,
wherein the end cover comprises:
a body covering the opening;
an inner edge extending from the body toward the internal space of the module case and inserted between the inner surface of the opening edge and the wall portion; and
an outer edge extending from the body toward the outer surface of the opening edge and attached to the outer surface of the opening edge.

5. The immersion-cooled battery module according to claim 4,
wherein the inner edge and the outer edge are spaced apart from each other at a predetermined distance, and the opening edge is configured to be inserted between the inner edge and the outer edge.

6. The immersion-cooled battery module according to claim 4,
wherein a sealant is interposed between the inner edge and the inner surface of the opening edge, and a structural adhesive is interposed between the outer edge and the outer surface of the opening edge.

7. The immersion-cooled battery module according to claim 4,
wherein a sealant is interposed between the inner edge and the wall portion.

8. The immersion-cooled battery module according to claim 1,
wherein the battery assembly comprises:
a plurality of sub-battery modules each having a battery cell stack in which a plurality of battery cells are stacked and disposed side by side in a first direction; and
an insulating block made of an insulating material and disposed between the first sub-battery module and the second sub-battery module adjacent to each other among the plurality of sub-battery modules.

9. The immersion-cooled battery module according to claim 8,
wherein the insulating block comprises a communication groove that is provided in an edge portion of the insulating block in close contact with the inner surface of the module case and allows the cooling liquid to pass from the first sub-battery module side to the second sub-battery module side.

10. The immersion-cooled battery module according to claim 8,
wherein both ends of the insulating block are coupled to the first sub-battery module and the second sub-battery module, respectively.

11. The immersion-cooled battery module according to claim 10,
wherein the module case comprises a stopper that protrudes from the inner surface of the module case and supports the insulating block, thereby restricting movement of the insulating block.

12. The immersion-cooled battery module according to claim 1,
wherein the cooling liquid comprises an insulating oil or a dielectric liquid.

13. A battery pack comprising an immersion-cooled battery module according to any one of claims 1 to 12.

14. A vehicle comprising an immersion-cooled battery module according to any one of claims 1 to 12.
